# EUROPÄISCHE PATENTSCHRIFT

(11) **EP 1 448 982 B1**
(45) Veröffentlichungstag und Bekanntmachung des Hinweises auf die Patenterteilung: **10.12.2008**
(21) Anmeldenummer: 02776843.1
(22) Anmeldetag: 18.10.2002
(51) Int. Cl.: G01N 27/419

(54) **SENSOR ZUR DETEKTION VON TEILCHEN IN EINEM GASSTROM**
SENSOR FOR DETECTING PARTICLES IN A GAS FLOW
CAPTEUR POUR DETECTER DES PARTICULES DANS UN FLUX DE GAZ

(30) Priorität: 20.11.2001 DE 10156946
(43) Veröffentlichungstag der Anmeldung: 25.08.2004
(73) Patentinhaber: ROBERT BOSCH GMBH, 70442 Stuttgart (DE)
(72) Erfinder: BERGER, Joachim, 73650 Winterbach (DE); SCHULTE, Thomas, 70376 Stuttgart (DE); WIRTH, Ralf, 71229 Leonberg (DE); SCHUMANN, Bernd, 71277 Rutesheim (DE); GLANZ, Uwe, 71679 Asperg (DE); MARX, Klaus, 70565 Stuttgart (DE); RIEGEL, Johann, 74321 Bietigheim-Bissingen (DE)
(86) Internationale Anmeldenummer: PCT/DE2002/003946
(87) Internationale Veröffentlichungsnummer: WO 2003/046534

(56) Entgegenhaltungen:
- EP-A- 1 006 354
- EP-A- 1 106 996
- DE-A- 3 304 548
- US-A- 4 770 760
- US-A- 4 916 384
- US-B1- 6 290 840
- PATENT ABSTRACTS OF JAPAN vol. 017, no. 231 (P-1532), 11. Mai 1993 (1993-05-11) & JP 04 359144 A (MITSUBISHI MOTORS CORP), 11. Dezember 1992 (1992-12-11)

## Beschreibung

### Stand der Technik

Die Erfindung geht von einem Sensor zur Detektion von Teilchen in einem Gasstrom, insbesondere von Rußpartikeln in einem Abgasstrom, gemäß der im Oberbegriff des Patentanspruches 1 näher definierten Art aus.

Die Detektion von Teilchen in einem Gasstrom wird in der Praxis auf verschiedene Art und Weise vorgenommen. Eine Möglichkeit der Detektion besteht in der Messung von Ladungen, die auf ein Meßelektrodensystem durch vorbeifliegende elektrisch geladene Partikel influenziert werden. Außerdem ist die Bestimmung von Partikeln in einem Gasstrom mit Hilfe optischer Methoden wie z. B. anhand einer Lichtschranke oder einer Trübung bekannt.

Des weiteren ist die Detektion von Teilchen in einem Gasstrom mit einem aus der Praxis bekannten Sensor der einleitend genannten Art bekannt, welcher insbesondere bei einem Kraftfahrzeug mit einem Dieselverbrennungsmotor zur Kontrolle der Funktionsfähigkeit eines in einem Abgasstrang angeordneten Rußfilters eingesetzt wird.

Beispielsweise ist bei einem bekannten Sensor der einleitend genannten Art ein Substrat einem Abgas ausgesetzt, so dass sich gegebenenfalls in dem Abgas enthaltene Teilchen, wie Rußteilchen, auf dem Substrat ablagern können. Durch die Ablagerung der Rußteilchen auf dem Substrat verringert sich dessen elektrischer Widerstand. Zur Messung des elektrischen Widerstandes dienen zwei Elektroden, die auf dem Substrat angeordnet sind.

Weiterhin sind aus der US 4,770,760, der US 6,290,840, der EP 1006354 und der JP 4359144 Stickoxidsensoren bekannt, die auf der Basis keramischer Festkörperelektrolyten bzw. isolierender Werkstoffe ausgeführt sind und mindestens zwei Sauerstoffpumpzellen umfassen.

### Vorteile der Erfindung

Der Sensor zur Detektion von Teilchen in einem Gasstrom, insbesondere von Rußpartikeln in einem Abgasstrom, mit den Merkmalen nach dem Oberbegriff des Patentanspruches 1, bei dem das Substrat einen Festkörperelektrolyten umfasst, in dem mindestens zwei Sauerstoffpumpzellen ausgebildet sind, welchen jeweils ein Elektrodenpaar zugeordnet ist, hat den Vorteil, dass mittels dieses Sensors ein semikontinuierliches hochtemperaturbeständiges Messverfahren durchgeführt werden kann, das mit geringem messtechnischen Aufwand langzeitstabil eingesetzt werden kann.

Der Sensor nach der Erfindung kann beispielsweise zur Anordnung in einem Abgasstrang eines Kraftfahrzeuges mit einem Dieselmotor oder auch zum Einsatz im Bereich der Haustechnik bei einer Ölheizung ausgelegt sein, wobei er eine einfache und kostengünstige Überprüfung der Funktionsfähigkeit von Filtern ermöglicht. Je nach Einsatzgebiet kann der Sensor in einem entsprechend ausgebildeten Gehäuse angeordnet sein.

Der Festkörperelektrolyt des Sensors nach der Erfindung ist beispielsweise eine Keramik, die ab einer Temperatur von ungefähr 400°C für Sauerstoff leitend ist.

Die Sauerstoffpumpzellen, die in dem Festkörperelektrolyten ausgebildet sind, weisen jeweils Grenzflächen auf, die jeweils von einer Elektrode gebildet sind und die beidseits des Festkörperelektrolyten angeordnet sind. Wenn sich der Sauerstoffgehalt des jeweils an den beiden Grenzflächen vorliegenden Mediums unterscheidet, so tritt zwischen den beiden Grenzflächen ein Spannungsgefälle auf, welches als Maß für den sich unterscheidenden Sauerstoffgehalt herangezogen werden kann. Insofern entspricht diese Arbeitsweise der Sauerstoffpumpzellen der Arbeitsweise einer bei λ-Sonden ausgebildeten Sauerstoffpumpzelle.

Der Sensor nach der Erfindung kann so ausgelegt sein, daß eine der Sauerstoffpumpzellen durch in einem Abgas enthaltene Teilchen derart beeinträchtigt wird, daß deren Sauerstoffpumpleistung stärker als diejenige der anderen Sauerstoffpumpenzelle nachläßt. Hieraus läßt sich auf eine Teilchenkonzentration in dem Abgas schließen.

Den beiden Elektrodenpaaren kann bei einer speziellen Ausführungsform eine gemeinsame Elektrode zugeordnet sein. In diesem Fall umfaßt der Sensor drei Elektroden, die den beiden Sauerstoffpumpzellen zugeordnet sind.

Die Elektroden des Sensors nach der Erfindung können beispielsweise aus Platin bestehen und nach einem dickschichttechnologischen Verfahren auf das Substrat aufgedruckt sein.

Der Sensor kann aus mehreren planaren Schichten ausgebildet sein, wobei der Festkörperelektrolyt eine dieser planaren Schichten bildet. Dann sind die Elektrodenpaare der Sauerstoffpumpzellen jeweils beidseits dieser planaren Schicht angeordnet. Die an einer Seite dieser Schicht angeordneten Elektroden sind jeweils einer Referenz, wie beispielsweise der Umgebung, ausgesetzt.

Bei einer vorteilhaften Ausführungsform des Sensors nach der Erfindung ist zumindest einer der Sauerstoffpumpzellen eine Diffusionsbarriere vorgeschaltet, so daß sich bei potentiometrischer Betriebsweise des Sensors eine zeitliche Meßsignaldifferenz zwischen den beiden Pumpzellen bzw. bei amperometrischer Betriebsweise des Sensors eine zwischen den beiden Pumpzellen differierende Stromdichte einstellt. Bei einem teilchenfreien Abgas stellt sich eine konstante geringe zeitliche Differenz der Meßsignale bzw. eine konstante differierende Stromdichte ein. Dadurch, daß eine der Sauerstoffpumpzellen bei in einem Abgasstrom enthaltenen Partikeln einem stärker abnehmenden Sauerstoffstrom ausgesetzt ist, verändert sich der Signalunterschied zwischen den beiden Pumpzellen deutlich. Die Geschwindigkeit der Änderung sowie die Höhe der Signaldifferenzen kann als Maß für die Konzentration an Teilchen in dem betreffenden Abgas verwendet werden.

Vorzugsweise ist beiden Sauerstoffpumpzellen jeweils eine Diffusionsbarriere vorgeschaltet, wobei sich die Diffusionskoeffizienten der beiden Diffusionsbarrieren dann unterscheiden.

Die Diffusionsbarrieren können aus Strukturen unterschiedlicher Porösität bestehen. Es ist aber auch denkbar, daß die mindestens eine Diffusionsbarriere derart ausgebildet ist, daß sie aus einer Kammer mit einem kleinen Diffusionsloch oder einem Diffusionsspalt besteht.

Die Diffusionsbarriere kann als mindestens eine Schutzschicht für eine Elektrode ausgebildet sein. Sie stellt dann vorzugsweise eine hochporöse Schicht dar, die im sauberen bzw. unbelasteten Zustand sauerstoffdurchlässig ist und als Schutz gegen abrasive Abgasbestandteile dient. Bei in einem Abgas auftretenden Teilchen setzt sich diese Schutzschicht zu.

Bei einer speziellen Ausführungsform des Sensors ist jeweils eine Elektrode der beiden Elektrodenpaare auf der abgaszugewandten Oberseite des Sensors angeordnet, wobei diese beiden Elektroden mit einer gemeinsamen hochporösen Schutzschicht versehen sind, welche sowohl den Schutz der Elektroden gegen abrasive Abgasbestandteile gewährleistet als auch bei amperometrischer Funktionsweise des Sensors eine Diffusionsbarriere für die jeweils als Pumpzelle ausgebildeten elektrochemischen Zellen bildet. Vorteilhafterweise ist dabei eine der oberseitigen Elektroden zusätzlich mit einer Schicht geringerer Porösität abgedeckt.

Befinden sich zu detektierende Teilchen in dem Abgas, so lagern sich diese besonders effektiv an der Abdeckstruktur geringerer Porösität an, so daß diese bevorzugt verstopft wird. Dadurch verändert sich bei potentiometrischer Betriebsweise die zeitliche Differenz der beiden Meßsignale und bei amperometrischer Betriebsweise die Differenz der Signalamplituden der beiden Pumpzellen deutlich. Die Geschwindigkeit dieser Änderung und die Höhe der Signaldifferenzen kann als Maß für die Konzentration an Teilchen in dem betreffenden Abgas benutzt werden.

Entsprechend können die Mündungen der Diffusionskanäle jeweils mit einer Schutzschicht abgedeckt sein.

Nach einer vorteilhaften Ausführungsform des Sensors nach der Erfindung sind die Diffusionsbarrieren und die Pumpzellen thermisch getrennt. Diese Trennung ermöglicht es, die Pumpzellen auf einem Temperaturniveau von beispielsweise 800°C zu betreiben, so daß ein Grenzstrombetrieb bei hoher Pumpstromdichte möglich ist. Gleichzeitig können die Diffusionsbarrieren bei Temperaturen von etwa 300°C betrieben werden, so daß sich dort Rußpartikel anlagern können, ohne zersetzt zu werden.

Der Sensor nach der Erfindung kann mit einer gepumpten Referenz arbeiten und/oder mindestens einen Kanal aufweisen. Dieser Kanal ist bevorzugt in einer separaten Schicht ausgebildet und entweder mit der Umgebung als Referenz verbunden oder dem Abgas ausgesetzt, in welchem der Sensor angeordnet ist. Im ersteren Fall ist der Kanal als Referenzkanal ausgebildet. Im letzteren Fall ist der Kanal als sogenannter Diffusionskanal ausgebildet.

Nach einer bevorzugten Ausführungsform umfaßt der Sensor zwei Diffusionskanäle, die jeweils mit einer Diffusionsbarriere ausgebildet sind. Die Diffusionsbarrieren haben jeweils eine unterschiedliche Porösität, so daß sich diejenige mit der geringeren Porösität beim Auftreten von Teilchen in dem zu messenden Abgas schneller zusetzt und dadurch die Menge an Sauerstoff, die jeweils an die auf einer Seite des Substrats angeordneten Elektroden gelangt, unterschiedlich groß ist bzw. sich durch das Zusetzen mit Teilchen unterschiedlich stark verändert.

Die Diffusionskanäle sind beispielsweise derart mit dem zu messenden Medium, d. h. dem Abgas verbunden, daß ihnen jeweils ein Loch zugeordnet ist, das in dem bevorzugt schichtartigen Substrat ausgebildet ist. Die beiden Löcher können mit Schichten unterschiedlicher Porösität abgedeckt sein, die mithin unterschiedliche Diffusionskoeffizienten aufweisen.

Die Löcher in dem Substrat und die in einer zweiten Schicht ausgebildeten Diffusionskanäle können bei Fertigung nach einem Siebdruckverfahren entweder als Hohlräume, die mittels eines freibrennenden Materials, wie beispielsweise Glaskohle, erzeugt werden, oder auch gefüllt ausgebildet sein. Im letzteren Fall sind sie mit einem porösen Material, wie porösem Zirkoniumdioxid, dem Glaskohle oder Aluminiumoxid beigemischt ist, gebildet. Die Ausbildung der Diffusionskanäle und der Löcher als Druckschichten begünstigt die Festigkeit der Diffusionsbarrieren, insbesondere bei Ausbildung als poröse Schichten.

Es ist auch möglich, die Löcher mit Diffusionsbarrieren auszufüllen, die auch die Funktion von Schutzschichten übernehmen und aus unterschiedlich porösem Material bestehen. Dann können die Schutzschichten, die oberhalb der Löcher angeordnet sind, entfallen.

Um den Sensor nach der Erfindung von abgelagerten Teilchen reinigen zu können, weist er vorzugsweise mindestens ein Heizelement auf. Zur Reinigung der Diffusionsbarrieren ist es dabei vorteilhaft, wenn ein Heizelement im Bereich der Diffusionsbarrieren angeordnet ist.

Um ein möglichst großes Meßsignal, d.h. möglichst große Pumpströme in den Sauerstoffpumpzellen, zu erhalten, ist es vorteilhaft, die beiden Diffusionsbarrieren, die jeweils einer Sauerstoffpumpzelle zugeordnet sind, thermisch voneinander getrennt auszubilden.

Vorteilhaft ist eine der Diffusionsbarrieren in der Nähe der Sauerstoffpumpzelle angeordnet, so daß diese Diffusionsbarriere während des Betriebs des Sensors dauerbeheizt ist und sich somit oxidierbare Teilchen nicht anlagern können bzw. schnell verbrennen. An der zweiten Diffusionsbarriere, die sich im Betrieb des Sensors auf einem niedrigeren Temperaturniveau befindet, ist hingegen eine Anlagerung von Teilchen möglich, so daß sich, wenn Teilchen in dem betreffenden Gasstrom enthalten sind, eine hohe Sauerstoffdurchlässigkeitsdifferenz zwischen der verstopften, unbeheizten und der nicht verstopften, dauerbeheizten Diffusionsbarriere einstellt.

Des weiteren kann, wenn ein Heizelement im Bereich der Diffusionsbarrieren angeordnet ist, bei einer derartigen thermischen Trennung der Diffusionsbarriere dieses Heizelement auf den Bereich derjenigen Diffusionsbarriere beschränkt sein, die beim Vorliegen von Teilchen in dem Gasstrom verstopft. Damit muß nur eine vergleichsweise kleine geometrische Fläche mittels des Heizelements erhitzt werden, so daß das Heizelement klein und energiesparend ausgelegt werden kann.

Bei einer bevorzugten Ausführung der Erfindung weist der Sensor eine Fangstruktur für im Gasstrom befindliche Teilchen auf, so daß die Anlagerung von Teilchen an den Diffusionsbarrieren unterstützt wird. Die Fangstruktur kann beispielsweise als Fanghülse oder als reliefartige Oberfläche ausgebildet sein.

Der Festkörperelektrolyt kann beispielsweise aus einem Werkstoff wie Yttrium-stabilisiertem Zirkoniumdioxid bestehen.

Der Sensor kann des weiteren eine Trägerschicht aufweisen, welche beispielsweise ebenfalls aus Yttrium-stabilisiertem Zirkoniumdioxid besteht und die mit einer Aluminiumoxid-Isolationsschicht versehen ist.

Nach einer fertigungstechnisch vorteilhaften Ausführungsform kann der Sensor nach der Erfindung zumindest teilweise in Siebdrucktechnik hergestellt sein.

Weitere Vorteile und vorteilhafte Weiterbildungen des Gegenstandes nach der Erfindung ergeben sich aus der Beschreibung, der Zeichnung und den Patentansprüchen.

### Zeichnung

Drei Ausführungsbeispiele des Sensors nach der Erfindung sind in der Zeichnung schematisch vereinfacht dargestellt und werden in der nachfolgenden Beschreibung näher erläutert. Es zeigen
Figur 1 eine Explosionsdarstellung eines Rußsensors;
Figur 2 eine alternative Ausführungsform eines Rußsensors; und
Figur 3 eine dritte Ausführungsform.

### Beschreibung der Ausführungsbeispiele

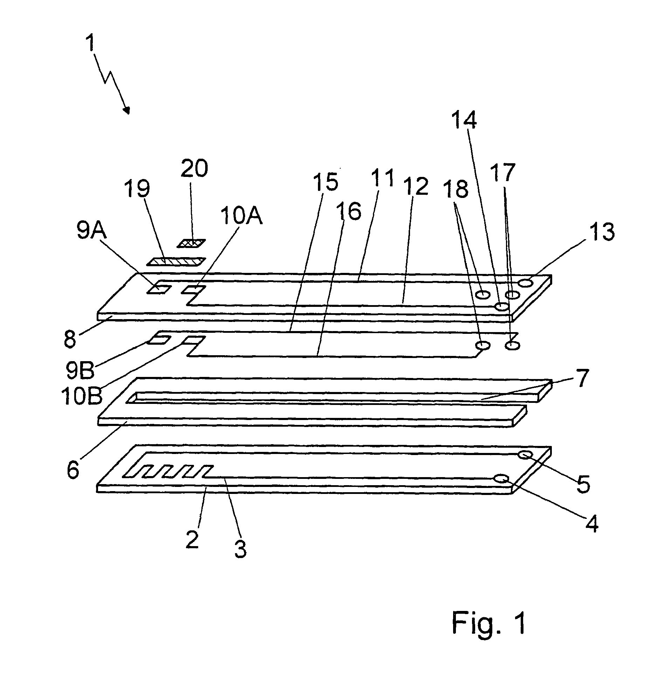

In Figur 1 ist ein Sensor 1 zur Detektion von Rußpartikeln in einem Abgas eines Kraftfahrzeuges dargestellt. Der Sensor 1 ist zum Einbau in einen Abgasstrang ausgebildet und hierzu in einem hier nicht näher dargestellten Gehäuse angeordnet.

Der Sensor 1 ist in sogenannter Dickschichttechnologie nach einem Siebdruckverfahren hergestellt und umfaßt eine Trägerschicht 2, die aus Yttrium-stabilisiertem Zirkoniumdioxid besteht und mit einer Isolationsschicht aus Aluminiumoxid überzogen ist. In der Trägerschicht 2 ist ein elektrisches Heizelement 3 integriert, das über Kontaktierungen 4 und 5 mit einer Spannungsquelle verbindbar ist. Das Heizelement 3 dient zur Reinigung des Sensors 1 von sich gegebenenfalls an dem Sensor angelagerten Rußpartikeln.

Auf der. Trägerschicht 2 ist eine zweite Schicht 6 angeordnet, in welcher ein sogenannter Referenzkanal 7 ausgebildet ist, der sich in Längsrichtung der zweiten Schicht 6 erstreckt und der mit der Umgebung in Verbindung steht, d. h. mit Luft gefüllt ist. Die zweite Schicht 6 ist von einer dritten Schicht 8 überdeckt, die einen Festkörperelektrolyten aus Yttrium-stabilisiertem Zirkoniumdioxid darstellt und in welcher zwei Sauerstoffpumpzellen, d. h. zwei elektrochemische Zellen, ausgebildet sind. Die beiden Sauerstoffpumpzellen sind mittels zweier Elektrodenpaare 9A, 9B und 10A, 10B gebildet, wobei jeweils eine Elektrode 9B bzw. 10B an der der zweiten Schicht 6 zugewandten Seite des Festkörperelektrolyten 8 angeordnet ist, so daß sie den Referenzkanal 7 begrenzt, und die jeweils andere Elektrode 9A bzw. 10A an der der zweiten Schicht 6 abgewandten Seite des Festkörperelektrolyten 8 angeordnet ist. Diese Seite des Festkörperelektrolyten 8 ist in Betrieb dem in dem Abgasstrang strömenden Abgas ausgesetzt.

Die an der dem Abgas ausgesetzten Seite des Festkörperelektrolyten 8 angeordneten Elektroden 9A und 10A sind über Leitungen 11 und 12 mit Kontaktierungen 13 und 14 verbunden. Die den Referenzkanal 7 begrenzenden Elektroden 9B und 10B sind über Leitungen 15 und 16 mit sogenannten Durchkontaktierungen 17 bzw. 18 verbunden. Die Kontaktierungen 13 und 14 sowie die Durchkontaktierungen 18 und 17, die den Festkörperelektrolyten 8 durchgreifen, sind mit einer Meß- und Steuereinheit verbindbar.

Die Elektroden 9A und 10A sind zum Schutz gegen abrasive Abgasbestandteile mit einer hochporösen Schutzschicht 19 versehen, die beim Betrieb der mittels der Elektrodenpaare 9A, 9B und 10A, 10B sowie dem Festkörperelektrolyten 8 gebildeten elektrochemischen Zellen eine Diffusionslimitierung bzw. -barriere darstellt.

Oberhalb der Elektrode 10A ist zusätzlich eine Schicht 20 auf der Schutzschicht 19 angebracht. Die Schicht 20 weist eine definierte Struktur mit geringer Porösität auf und bildet eine weitere Diffusionsbarriere für Sauerstoff. Die Schicht 20 setzt sich bei Auftreten von Teilchen wie Rußpartikeln in dem Abgas bevorzugt zu, so daß die Durchlässigkeit für Sauerstoff abnimmt.

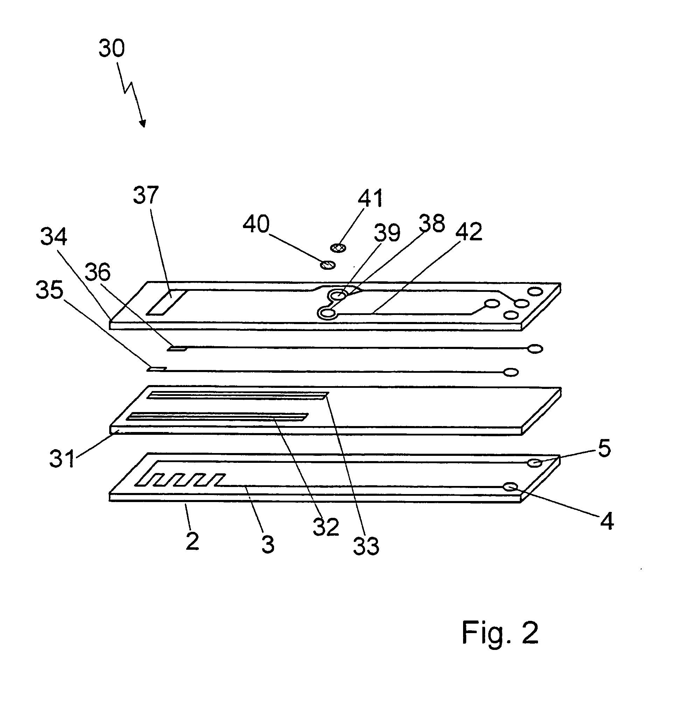

In Figur 2 ist eine alternative Ausführungsform eines Rußsensors 30 dargestellt, die zum Einbau in einen Abgasstrang eines Kraftfahrzeugs dienen kann. Entsprechend dem Sensor nach Figur 1 ist der Rußsensor 30 in einem nicht dargestellten Gehäuse angeordnet.

Der Sensor 30 umfaßt eine Trägerschicht 2, deren Aufbau demjenigen der Trägerschicht des Sensors nach Figur 1 entspricht.

Auf der Trägerschicht 2 ist eine zweite Schicht 31 angeordnet, in welcher zwei an der der Trägerschicht 2 abgewandten Seite angeordnete, sogenannte Diffusionskanäle 32 und 33 ausgebildet sind.

Auf der zweiten Schicht 31 ist wiederum eine dritte Schicht 34 angeordnet, die aus Yttrium-stabilisiertem Zirkoniumdioxid besteht und an deren der zweiten Schicht 31 zugewandten Seite zwei Elektroden 35 und 36 angeordnet sind, die in einem Endbereich der Diffusionskanäle 32 und 33 liegen, und an deren der zweiten Schicht 31 abgewandten Seite eine dritte Elektrode 37 angeordnet ist. Die Elektroden 35 und 36 bilden jeweils mit der dritten Elektrode 37 eine sogenannte Sauerstoffpumpzelle, d.h. eine elektrochemische Zelle.

An den den Elektroden 35 und 36 abgewandten Enden der Diffusionskanäle 32 und 33 sind in dem Festkörperelektrolyten 34 zwei Löcher bzw. Auslässe 38 und 39 ausgebildet, die in die Diffusionskanäle 32 und 33 münden und mittels poröser Schutzschichten 40 bzw. 41 abgedeckt sind. Die Schutzschichten 40 und 41 weisen unterschiedliche Porösitäten auf, bilden jeweils eine Diffusionsbarriere und gewährleisten einen Schutz der Elektroden 35 und 36 gegen abrasive Abgasbestandteile.

Die Diffusionsbarrieren 40 und 41, deren Diffusionskoeffizienten sich unterscheiden, sind aufgrund der Entfernung zu den Elektroden 35, 36 und 37 von den durch diese Elektroden gebildeten elektrochemischen Zellen thermisch getrennt.

An dem Festkörperelektrolyten 34 ist ein Heizelement 42 ausgebildet, das zum Freibrennen der Schutzschichten 40 und 41 von Rußteilchen dient.

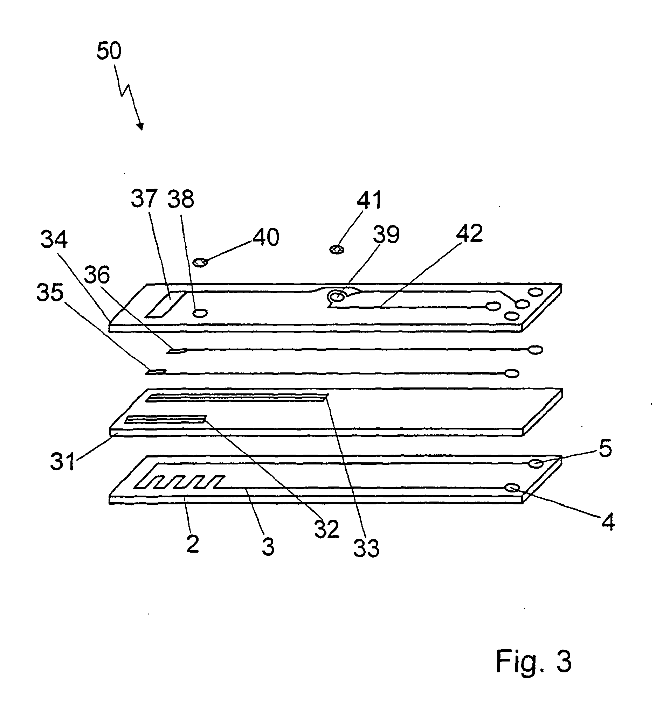

In Figur 3 ist eine dritte Ausführungsform eines Rußsensors 40, 50 dargestellt, der ebenfalls in einem dem jeweiligen Einsatzzweck angepaßten, nicht dargestellten Gehäuse angeordnet ist.

Der Aufbau des Sensors 50 entspricht im wesentlichen demjenigen des Sensors nach Figur 2. Jedoch ist der Sensor 50 so ausgelegt, daß die Diffusionsbarrieren 40 und 41, welche hier eine unterschiedliche Porösität aufweisen, thermisch voneinander getrennt sind. So soll eine der Diffusionsbarrieren eine möglichst hohe Temperatur aufweisen, um möglichst frei von Rußpartikeln zu bleiben, während die andere Diffusionsbarriere möglichst kühl gehalten werden soll, um eine gute Partikelablagerung daran zu erreichen. Auf diese Weise erhält man ein sehr großes Differenzsignal.

Da sich die Einstellung eines unterschiedlichen Temperaturniveaus an den Löchern bzw. Auslässen 38 und 39 als schwierig erweist, wenn diese räumlich nahe beieinander liegen, wird die thermische Trennung der Diffusionsbarrieren 40 und 41 dadurch gewährleistet, daß eine der Diffusionsbarrieren, bei der Ausführung nach Figur 2 die Diffusionsbarriere 40, in der Nähe der den Sauerstoffpumpzellen zugeordneten Pumpelektroden 35, 36 und 37 angeordnet ist. Der Bereich der Pumpelektroden stellt im Betriebszustand des Sensors 50 eine dauerbeheizte Zone dar, womit das näher daran liegende Loch bzw. der Auslaß 38, welchem die Diffusionsbarriere 40 zugeordnet ist, durch diese dauerbeheizte Zone stärker erwärmt wird als das Loch bzw. der Auslaß 39, welcher zu der anderen Diffusionsbarriere 41 führt.

Während ein der aus den Elektroden 36 und 37 gebildeten Sauerstoffpumpenzelle und der Di.ffusionsbarriere 41 zugeordneter Diffusionskanal 33 eine lineare Form wie in der Ausführung nach Figur 2 aufweist, ist der zweite Diffusionskanal 32, in den das näher an der dauerbeheizten Zone liegende Loch 38 mündet, in der zweiten Schicht 31 U-förmig mit einer Kehre ausgebildet, welche in der Figur 3 nicht näher dargestellt ist. Durch den U-förmigen Verlauf des Diffusionskanals 32 können diesen durchwandernde Partikel wieder in die dauerbeheizte Zone zurückgelangen, wobei die Wegstrecke zwischen den beiden Diffusionsbarrieren 40 und 41 und den jeweiligen Elektroden 35 bzw. 36 durch eine entsprechende Auslegung des zweiten Kanals 32 im wesentlichen gleich ist.

Zum Freibrennen der Schutzschicht bzw. Diffusionsbarriere 41 von sich daran abgelagerten Partikeln ist an dem Festkörperelektrolyten 34 ein Heizelement 42 ausgebildet.

Im Betrieb des Sensors 50 wird die Differenztemperatur zwischen den beiden Diffusionsstrukturen, welchen die Diffusionsbarriere 40 bzw. 41 zugeordnet sind, auf einem konstanten Wert eingestellt. Die sich hieraus ergebenden unterschiedlichen Temperaturen in den beiden Diffusionskanälen 32 und 33 bewirken zwar unterschiedliche Diffusionskonstanten und damit einen zeitlichen Versatz zwischen den beiden mittels der Elektroden 35 und 37 bzw. 36 und 37 gemessenen Signalströmen. Der zeitliche Versatz ist jedoch konstant und kann elektronisch oder auch durch entsprechende Ausbildung der Diffusionskanäle 32 und 33 kompensiert werden.

Bei amperometrischer Betriebsweise der Elektrodenpaare 35 und 37 bzw. 36 und 37 ergibt sich durch Pumpen von Sauerstoff durch die Diffusionskanäle 32 und 33 in Richtung der Elektrode 37 bei einem partikelfreien Abgasstrom eine konstante Differenz der sogenannten Pumpstromdichten. Diese Differenz beruht auf den unterschiedlichen resultierenden Diffusionskonstanten der beiden Diffusionsbarrieren 40 und 41.

Beim Vorliegen von Teilchen in dem Abgasstrom lagern sich diese bevorzugt an der im Betrieb des Sensors 50 nicht beheizten Diffusionsbarriere 41 an, welche eine geringere Porösität als die Diffusionsbarriere 40 aufweist. Die Diffusionsbarriere 41 wird demnach bevorzugt verstopft, was zu einer Veränderung der Differenz der Signalamplituden der beiden Elektrodensysteme 35, 37 und 36, 37 führt. Die Geschwindigkeit dieser Änderung und der Betrag der Signaldifferenzen dienen als Maß für die Konzentration von Teilchen in dem betreffenden Abgasstrom.

Bei den oben beschriebenen Ausführungen können die beiden Heizelemente 3 und 42 neben ihrer Reinigungsfunktion des weiteren zur Messung der Temperatur an den Diffusionsbarrieren und den Sauerstoffpumpzellen dienen.

## Patentansprüche

1. Sensor zur Detektion von Teilchen in einem Gasstrom, insbesondere von Rußpartikeln in einem Abgasstrom, mit einem Substrat (8; 34) aus einem isolierenden Werkstoff, das einen Festkörperelektrolyten umfasst, in dem mindestens zwei Sauerstoffpumpzellen ausgebildet sind, welchen jeweils ein Elektrodenpaar (9A, 9B, 10A, 10B, 35, 36, 37) und jeweils eine unmittelbar dem Gasstrom aussetzbare Diffusionsbarriere zugeordnet ist, wobei sich die Diffusionsbarrieren (19, 20; 40, 41) hinsichtlich ihrer Porosität unterscheiden.

2. Sensor nach Anspruch 1, **dadurch gekennzeichnet, dass** die Diffusionsbarriere (40, 41) und die Sauerstoffpumpzellen thermisch getrennt sind.

3. Sensor nach einem der Ansprüche 1 oder 2, **gekennzeichnet durch** mindestens einen Kanal (7; 32, 33).

4. Sensor nach Anspruch 3, **dadurch gekennzeichnet, dass** der Kanal ein Referenzkanal (7) ist.

5. Sensor nach Anspruch 3, **dadurch gekennzeichnet, dass** der Kanal ein Diffusionskanal (32; 33) ist.

6. Sensor nach Anspruch 5, **gekennzeichnet durch** zwei Diffusionskanäle (32; 33), die jeweils mit einer Diffusionsbarriere (40; 41) ausgebildet sind.

7. Sensor nach Anspruch 6, **dadurch gekennzeichnet, dass** den Diffusionskanälen (32, 33) jeweils ein Loch (38, 39) zugeordnet ist, das in dem Substrat (34) ausgebildet ist.

8. Sensor nach einem der Ansprüche 1 bis 7, **gekennzeichnet durch** mindestens ein Heizelement (3; 42).

9. Sensor nach Anspruch 8, **dadurch gekennzeichnet, dass** ein Heizelement (42) im Bereich der Diffusionsbarrieren (40; 41) angeordnet ist.

10. Sensor nach einem der Ansprüche 1 bis 11, **dadurch gekennzeichnet, dass** die Diffusionsbarriere (40), die einer der beiden Sauerstoffpumpzellen vorgeschaltet ist, von der Diffusionsbarriere (41), die der anderen der beiden Sauerstoffpumpzellen vorgeschaltet ist, thermisch getrennt ist.

11. Sensor nach einem der Ansprüche 1 bis 10, **gekennzeichnet durch** eine Fangstruktur für in dem Gasstrom befindliche Teilchen.

12. Sensor nach einem der Ansprüche 1 bis 11, **dadurch gekennzeichnet, dass** der Festkörperelektrolyt (8; 34) aus Yttrium-stabilisiertem Zirkoniumdioxid besteht.

13. Sensor nach einem der Ansprüche 1 bis 12, **gekennzeichnet durch** eine Trägerschicht (2), die vorzugsweise aus Yttrium-stabilisiertem Zirkoniumdioxid besteht und mit einer Aluminiumoxid-Isolationsschicht versehen ist.

14. Sensor nach einem der Ansprüche 1 bis 13, **dadurch gekennzeichnet, dass** er zumindest teilweise nach einem Siebdruckverfahren hergestellt ist.

15. Sensor nach Anspruch 1, **dadurch gekennzeichnet, dass** die Diffusionsbarriere (19; 40, 41) als Schutzschicht für eine Elektrode (9A, 10A; 35, 36) ausgebildet ist.

## Claims

1. Sensor for detecting particles in a gas flow, in particular soot particles in an exhaust gas flow, comprising a substrate (8; 34) composed of an insulating material which comprises a solid electrolyte, in which are formed at least two oxygen pump cells which are assigned respectively an electrode pair (9A, 9B, 10A, 10B, 35, 36, 37) and respectively a diffusion barrier that can be exposed directly to the gas flow, wherein the diffusion barriers (19, 20; 40, 41) differ with regard to their porosity.

2. Sensor according to Claim 1, **characterized in that** the diffusion barrier (40, 41) and the oxygen pump cells are thermally separated.

3. Sensor according to either of Claims 1 and 2, **characterized by** at least one channel (7; 32, 33).

4. Sensor according to Claim 3, **characterized in that** the channel is a reference channel (7).

5. Sensor according to Claim 3, **characterized in that** the channel is a diffusion channel (32; 33).

6. Sensor according to Claim 5, **characterized by** two diffusion channels (32; 33) formed in each case with a diffusion barrier (40; 41).

7. Sensor according to Claim 6, **characterized in that** the diffusion channels (32, 33) are assigned respectively a hole (38, 39) formed in the substrate (34).

8. Sensor according to any of Claims 1 to 7, **characterized by** at least one heating element (3; 42).

9. Sensor according to Claim 8, **characterized in that** a heating element (42) is arranged in the region of the diffusion barriers (40; 41).

10. Sensor according to any of Claims 1 to 11, **characterized in that** the diffusion barrier (40) disposed upstream of one of the two oxygen pump cells is thermally separated from the diffusion barrier (41) disposed upstream of the other of the two oxygen pump cells.

11. Sensor according to any of Claims 1 to 10, **characterized by** a trapping structure for particles situated in the gas flow.

12. Sensor according to any of Claims 1 to 11, **characterized in that** the sold electrolyte (8; 34) is composed of yttrium-stabilized zirconium dioxide.

13. Sensor according to any of Claims 1 to 12, **characterized by** a carrier layer (2), which is preferably composed of yttrium-stabilized zirconium dioxide and is provided with an aluminium oxide insulation layer.

14. Sensor according to any of Claims 1 to 13, **characterized in that** it is produced at least partly according to a screen printing method.

15. Sensor according to Claim 1, **characterized in that** the diffusion barrier (19; 40, 41) is formed as a protective layer for an electrode (9A, 10A; 35, 36).

## Revendications

1. Détecteur pour la détection de particules dans un écoulement de gaz, en particulier de particules de suie dans un écoulement de gaz d'échappement, lequel détecteur présente un substrat (8; 34) en un matériau isolant qui comprend un électrolyte solide dans lequel au moins deux cellules de pompage d'oxygène sont formées, chacune étant associée à une paire d'électrodes (9A, 9B, 10A, 10B, 35, 36, 37) et à une barrière de diffusion qui peut être exposée à l'écoulement de gaz, les barrières de diffusion (19, 20; 40, 41) présentant des porosités différentes.

2. Détecteur selon la revendication 1, **caractérisé en ce que** la barrière de diffusion (40, 41) et les cellules de pompages d'oxygène sont séparées thermiquement.

3. Détecteur selon l'une des revendications 1 ou 2, **caractérisé par** au moins un canal (7; 32, 33).

4. Détecteur selon la revendication 3, **caractérisé en ce que** le canal est un canal de référence (7).

5. Détecteur selon la revendication 3, **caractérisé en ce que** le canal est un canal de diffusion (32; 33).

6. Détecteur selon la revendication 5, **caractérisé par** deux canaux de diffusion (32; 33) configurés tous deux avec une barrière de diffusion (40; 41).

7. Détecteur selon la revendication 6, **caractérisé en ce qu'**à chacun des canaux de diffusion (32, 33) est associé un trou (38, 39) formé dans le substrat (34).

8. Détecteur selon l'une des revendications 1 à 7, **caractérisé par** au moins un élément chauffant (3; 42).

9. Détecteur selon la revendication 8, **caractérisé en ce qu'**un élément chauffant(42) est disposé dans la zone occupée par les barrières de diffusion (40; 41).

10. Détecteur selon l'une des revendications 1 à 9, **caractérisé en ce que** la barrière de diffusion (40) prévue en amont de l'une des deux cellules de pompage d'oxygène est séparée thermiquement de la barrière de diffusion (41) raccordée en amont de l'autre cellule de pompage d'oxygène.

11. Détecteur selon l'une des revendications 1 à 10, **caractérisé par** une structure de piégeage des particules présentes dans l'écoulement de gaz.

12. Détecteur selon l'une des revendications 1 à 11, **caractérisé en ce que** l'électrolyte solide (8; 34) est constitué de dioxyde de zirconium stabilisé par yttrium.

13. Détecteur selon l'une des revendications 1 à 12, **caractérisé par** une couche de support (2) qui est de préférence constituée de dioxyde de zirconium stabilisé par yttrium et qui est dotée d'une couche d'isolation en oxyde d'aluminium.

14. Détecteur selon l'une des revendications 1 à 13, **caractérisé en ce qu'**il est réalisé au moins en partie par un procédé de sérigraphie.

15. Détecteur selon la revendication 1, **caractérisé en ce que** la barrière de diffusion (19; 40, 41) est configurée comme couche de protection de l'électrode (9A, 10A; 35, 36).
